# EUROPEAN PATENT APPLICATION

(11) **EP 2 775 668 A2**
(43) Date of publication of application: **10.09.2014**
(21) Application number: 14156771.9
(22) Date of filing: 26.02.2014
(51) Int. Cl.: H04L 12/28

(54) **Display apparatus, server and control methods thereof**

(30) Priority: 08.03.2013 US 201361774753 P; 13.06.2013 KR 20130067908
(71) Applicant: Samsung Electronics Co., Ltd., Suwon-si Gyeonggi-do 443-742 (KR)
(72) Inventor: Choi, Jun-hae, Gyeonggi-do (KR); Cho, Jung-yon, Seoul (KR)
(74) Representative: Brandon, Paul Laurence

(57) **Abstract**

A display apparatus, a server, and control methods thereof which enable a user to selectively use functions provided by the server and functions provided by the display apparatus through a unified UI. The display apparatus receives from a server UI information corresponding to a first function predetermined by a server from among a plurality of functions performable by a display apparatus, displays a first UI including a first item corresponding to the first function based on the received UI information and a second item corresponding to a second function added by the display apparatus from among the plurality of functions. If the second item is selected by input from a user, the display apparatus performs the second function corresponding to the second item.

## Description

### BACKGROUND

### Field

Apparatuses and methods consistent with exemplary embodiments relate to a display apparatus, a server and control methods thereof, and more particularly, to a display apparatus, a server and control methods thereof which enable a user to selectively use not only functions provided by the server but also functions provided by the display apparatus through a user interface (UI) provided by the server.

### Description of the Related Art

Many of industrial standard organizations such as Digital Living Network Alliance (DLNA), Home Audio-Video Interoperability (HAVi) and Universal Plug and Play (UPnP) are actively conducting studies on improvements of home network technology.

Within the home network, remote user interface (RUI) technology may be used to allow one device to control functions of another device.

The RUI technology is based on client-server architecture and collectively refers to the technology which once a remote user interface server (RUIS) provides a UI to a remote user interface client (RUIC) such as a television (TV) through a network, the RUIC receives the UI from the RUIS and shows the UI for a user to use functions of the RUIS through the RUIC.

Due to its nature, the RUI technology enables the user to use functions of the RUIS through the RUI, but the RUIC performs only limited functions as defined in advance by the RUI technology, such as displaying RUI or playing contents.

For example, in an RUI system of related art, if the RUIS provides the RUIC with a UI page showing preset functions or contents (hereinafter, to be called "functions") and related contents, the RUIC displays the UI page on its display screen. That is, the RUIC receives and displays on its screen the UI page as unilaterally provided by the RUIS.

In this case, the user selects functions of the UI page through a remote controller provided by a service provider managing the RUIS or the RUIC manufacturer.

The RUIC transmits a user's input given through the remote controller to the RUIS to allow the user to use a selected function and performs limited functions such as playing contents according to information provided by the RUIS.

In such RUI system, the RUIS unilaterally provides the UI page showing preset functions to display the UI page in the RUIC. Accordingly, the RUIS has the right to control Uls to be shown in the RUIC, and thus there is no problem in providing UI as desired by the RUIS. However, the RUIC may not show functions which may be added by the RUIC other than the functions displayed in the UI page. As a result, the user may not simultaneously compare and select functions provided by the RUIS and functions which may be added by the RUIC when the RUI page is displayed in the display screen of the RUIC.

Further, if the user desires to use functions which may be added by the RUIC, other than the functions displayed in the UI page, she or he should convert a signal input for the display screen of the RUIC from the RUIS to the RUIC using the remote controller, pull up onto the display screen the UI of the RUIC and select a necessary function therefrom. To use the functions of the RUIS again, the user should convert the signal input for the display screen of the RUIC from the RUIC to the RUIS using the remote controller, pull up to the display screen the UI of the RUIS and select a necessary function therefrom. As a result, a user needs to convert the UI picture to use functions of the RUIS or RUIC, which is inconvenient.

There is a need to reflect information of functions being addable by the RUIC, on the UI page provided by the RUIS and show the user the UI page reflecting the information of both the RUIC and RUIS.

### SUMMARY

Accordingly, one or more exemplary embodiments provide a display apparatus, a server and control methods thereof which simultaneously shows user functions predetermined by a server and functions that may be added by or at the display apparatus such as a TV, using a user interface (UI) provided by the server and thus enables the user to selectively use the functions of the server and the display apparatus without additional inconvenient manipulations such as switching between various Uls.

The foregoing and/or other aspects may be achieved by providing a display apparatus including: an image processor which processes an image signal; a display which displays an image thereon based on the image signal; a communication part which communicates with a server; a user input part which receives, from a server, via the communication part, a user's input; and a controller which receives user interface (UI) information corresponding to a first function predetermined by the server from among a plurality of functions performable or executable by the display apparatus, , displays on the display a first UI including a first item corresponding to the first function based on the received UI information and a second item corresponding to a second function added by the display apparatus from among the plurality of functions. If the second item of the first UI is selected by a user's input via the user input part, the controller controls the display apparatus such that the second function is performed.

The UI information may include script-based UI information.

The controller may execute a web browser and displays on the display a UI page based on the script-based UI information.

If a script of the UI page is operating, the controller may execute a plug-in for providing the web browser with information related to the second function.

The controller may transmit at least the information related to the second function to the server, may receive information on the first UI including the second item from the server, and may display on the display the first UI including the second item based on the received information.

The transmitted information about the second function may include at least one of a number, a name, an identifier, a category, related keywords, a degree of importance, driving information, variable information and at least one icon for representing a display of the second function.

The second function may include a function of displaying an image by an application or a function of displaying an image of content.

If the second item is selected, the controller may display a second UI including sub items of the second function.

The controller may further output at least one of an image and audio of the first function on the displayed second UI.

The controller may control at least one of the image and audio output according to the user's input.

The information about the first UI including the second item received from the server and may include one of a bitmap-based UI and a script-based UI.

According to another aspect, a control method of a display apparatus includes: receiving from a server, UI information corresponding to a first function predetermined by the server from among a plurality of functions performable or executable by the display apparatus; displaying a first UI including a first item corresponding to the first function based on the UI information and a second item corresponding to a second function added by the display apparatus from among the plurality of functions; selecting the second item from the first UI according to a user's input; and performing the second function corresponding to the second item.

The receiving the UI information may include receiving script-based UI information.

The displaying the first UI may include executing a web browser and displaying a UI page based on the script-based UI information.

If a script of the UI page is operating, the displaying the first UI may include executing a plug-in for providing the web browser with information related to the second function.

The displaying the first UI may include transmitting to the server at least information about the second function, receiving information about the first UI including the second item from the sever, and displaying the first UI including the second item based on the received information.

The transmitted information about the second function may include at least one of a number, name, an identifier, a category, related keywords, a degree of importance, driving information, variable information and one or more icons for representing a display of the second function.

If the second item is selected, the selecting the second item may include displaying a second UI including a plurality of sub items of the second function.

The selecting the second item may further include outputting at least one of an image and audio of the first function on the displayed second UI.

The selecting the second item may further include controlling at least one of the image and said audio output according to further input from the user.

The performing the second function may include performing a function for displaying an image by an application or performing a function for displaying an image of content.

The information about the first UI including the second item received from the server may include one of a bitmap-based UI and a script-based UI.

According to yet another aspect, a server includes: a communication part which communicates with a display apparatus; a storage part which stores therein UI information corresponding to a first function predetermined by the server from among a plurality of functions performable or executable by the display apparatus; and a controller which generates a first UI including a first item corresponding to the first function and a second item corresponding to a second function added by the display apparatus from among a plurality of functions of the display apparatus, based on the stored UI information and information about the functions performable or executable by the display apparatus. The plurality of functions performable or executable by the display are received from the display apparatus through the communication part. The controller further transmits the generated first UI to the display apparatus.

The information about functions performable by the display apparatus may include at least one of a number, a name, an identifier, a category, related keywords, a degree of importance, driving information, variable information and one or more icons for representing a display of the second function.

If the second item is selected through a user's input at the display apparatus, the controller may request the display apparatus to perform the second function corresponding to the second item.

The controller may transmit to the display apparatus the generated first UI together with at least one of user account information for user authentication and server status information.

The second function may be requested and driven by an application programming interface (API) provided by the display apparatus or through a remote user interface (RUI) protocol extension between the server and the display apparatus.

According to another aspect, a control method of a server includes: receiving from a display apparatus, information about functions performable or executable by the display apparatus; generating a first UI including a first item corresponding to a first function and a second item corresponding to a second function added by the display apparatus from among a plurality of functions performable or executable by the display apparatus, based on UI information corresponding to the first function predetermined by a server from among a plurality of functions performable or executable by the display apparatus and information about functions performable by the display apparatus. The information about functions is received from the display apparatus. The method further includes transmitting the generated first UI to the display apparatus and if the second item is selected via user's input at the display apparatus, requesting the display apparatus to perform the second function.

The receiving information about functions performable by the display apparatus may include receiving at least one of a number, a name, an identifier, a category, related keywords, a degree of importance, driving information, variable information and one or more icons representing a display of the second function.

The requesting the display apparatus may include requesting the display apparatus to perform the second function corresponding to the second item through an API provided by the display apparatus or through a remote user interface (RUI) protocol extension between the server and the display apparatus.

### BRIEF DESCRIPTION OF THE DRAWINGS

The above and/or other aspects will become apparent and more readily appreciated from the following description of certain exemplary embodiments, taken in conjunction with the accompanying drawings, in which:
FIG. 1 is a block diagram illustrating a display apparatus and a service providing server according to an exemplary embodiment;
FIG. 2 is a view illustrating a method of providing user interface (UI) information to the display apparatus according to an exemplary embodiment;
FIG. 3 is a block diagram illustrating a display apparatus according to an exemplary embodiment;
FIG. 4 is a block diagram illustrating a program for generating a UI according to an exemplary embodiment;
FIG. 5 is a block diagram illustrating a service providing server according to an exemplary embodiment;
FIG. 6 is a view illustrating a first UI according to an exemplary embodiment;
FIG. 7 is a view illustrating a second UI according to an exemplary embodiment;
FIG. 8 is a flowchart showing operations of the display apparatus according to an exemplary embodiment;
FIG. 9 is a block diagram illustrating a display apparatus and a service providing server according to another exemplary embodiment;
FIG. 10 is a view illustrating a method of providing a first UI according to another exemplary embodiment;
FIG. 11 is a block diagram illustrating a display apparatus according to another exemplary embodiment;
FIG. 12 is a block diagram illustrating a service providing server according to another exemplary embodiment; and
FIG. 13 is a flowchart showing operations of the service providing server according to another exemplary embodiment.

### DETAILED DESCRIPTION OF EXEMPLARY EMBODIMENTS

Below, exemplary embodiments will be described in detail with reference to the accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

Hereinafter, a display apparatus, a server and control methods thereof according to exemplary embodiments will be described in detail with reference to accompanying drawings.

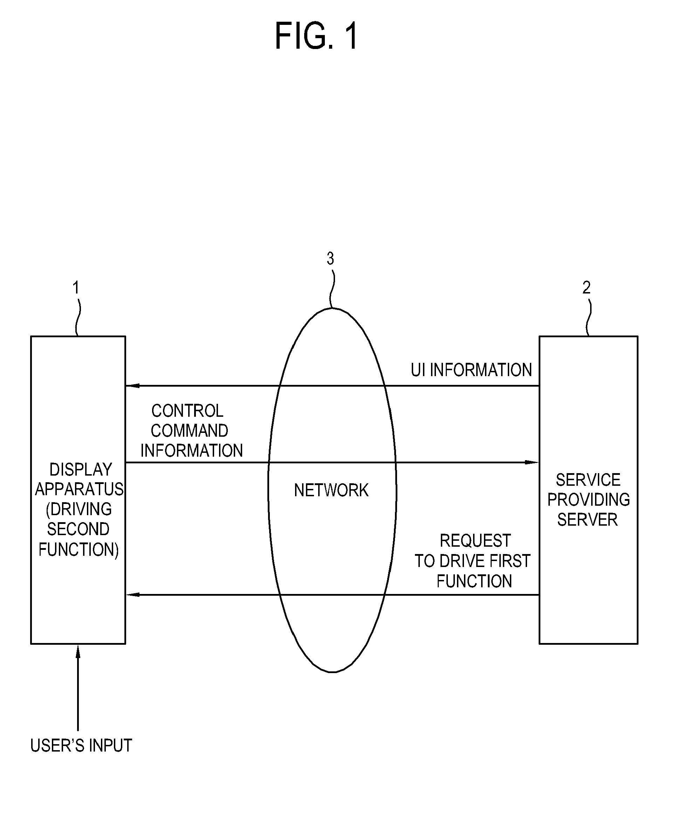

FIG. 1 is a block diagram of a display apparatus 1 and a service providing server 2 according to an exemplary embodiment.

The display apparatus 1 and the service providing server 2 according to the exemplary embodiment are connected to each other through a network 3.

The display apparatus 1 is an apparatus operating according to a user's command, and includes, e.g., an image displaying apparatus such as a television (TV) and a computer e.g., a personal computer or a laptop.

A user's command includes information used to determine performance/non-performance of a predetermined operation by the display apparatus 1 according to a user's act, etc. The user's command may include a remote control signal input through a manipulation of a remote controller, or a voice signal input through a microphone.

In an exemplary embodiment, it is agreed that the user's command is a remote control signal input through a manipulation of a remote controller, and the display apparatus 1 is a TV. Hereinafter, the user's command will be referred to as a user's input for convenience.

The network 3 includes a device or an infrastructure used for communicating and exchanging user's input and information of provided content services between the display apparatus 1 and the service providing server 2, and may be a wired and/or wireless network.

The service providing server 2 is a remote user interface server (RUIS) which is connected to the network 3 and which provides a user who is located in a remote place predetermined content service, and includes, e.g., a RVU server, DIRECTV server, IP TV server, smart set-top box, smart phone, smart pad, personal computer (PC) and laptop computer, which may provide content service.

The service providing server 2 transmits to the display apparatus 1 UI information corresponding to a first function predetermined by the service providing server 2 out of a plurality of functions performable by the display apparatus 1 as a remote user interface client (RUIC).

In the present exemplary embodiment, the first function may include, e.g., a function for displaying or playing contents or applications.

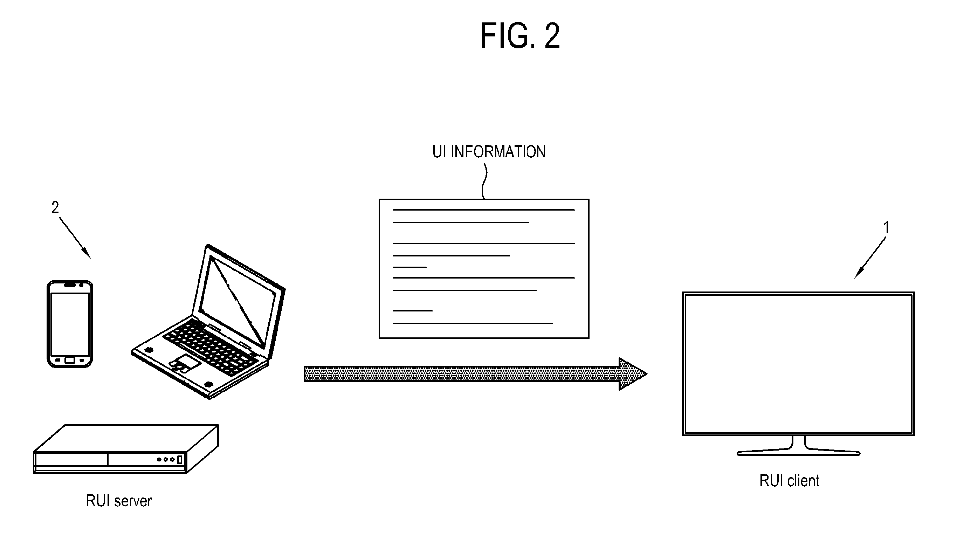

As shown in FIG. 2, the UI information transmitted by the service providing server 2 to the display apparatus 1 may include script-based UI information. The script-based UI information may include a UI page in which JavaScript is embedded to operate on a web browser of the display apparatus 1 as will be described in greater detail below.

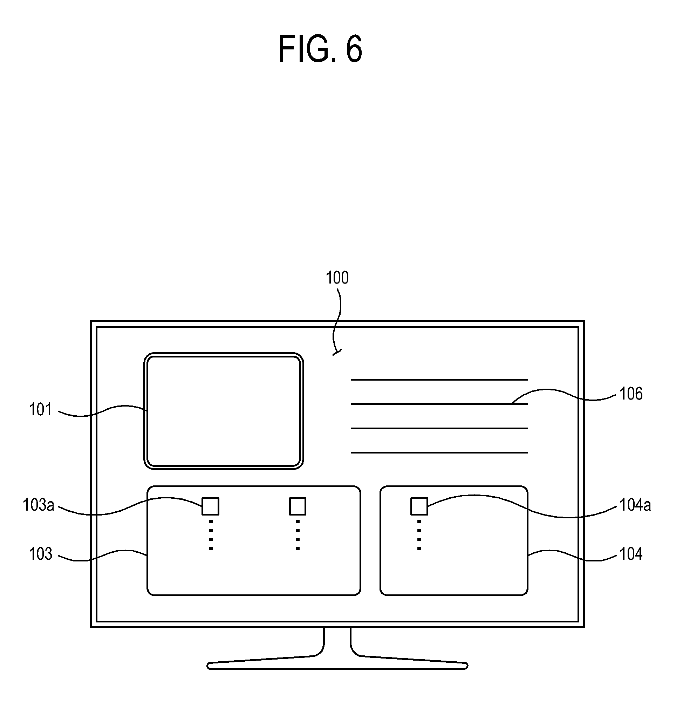

The display apparatus 1 generates and displays a first UI 100 (e.g., refer to FIG. 6) including at least one first item 103a (refer to FIG. 6) corresponding to a first function based on UI information provided by the service providing server 2 and at least one second item 104a (refer to FIG. 6) corresponding to a second function that may be added by or at the display apparatus 1 out of a plurality of functions of the display apparatus 2.

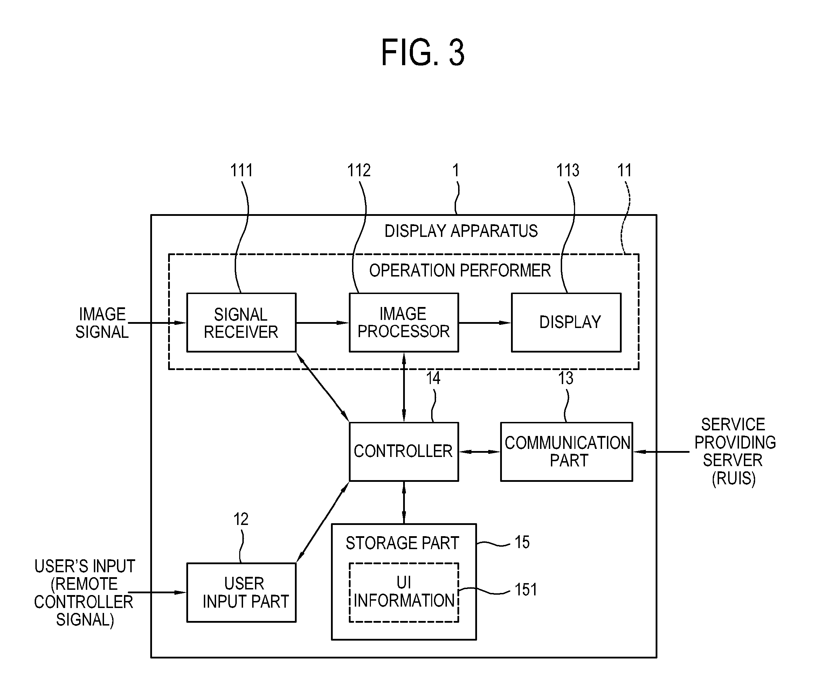

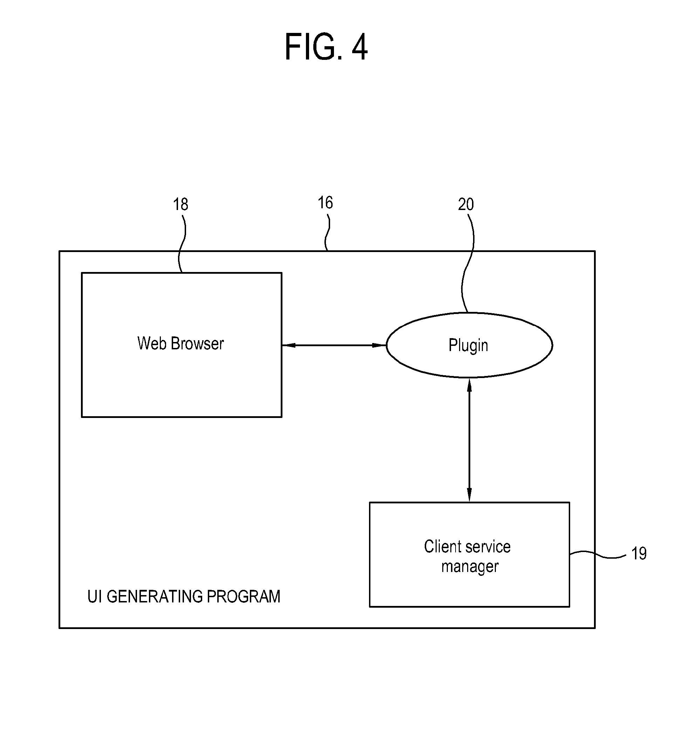

To do so, the display apparatus 1 executes a UI generating program 16 (e.g., shown in FIG. 4) through a controller 14 (e.g., refer to FIG. 3). As shown in FIG. 4, the UI generating program 16 includes a web browser 18 which displays on a screen a UI page in which JavaScript is embedded on basis of the script-based UI information; a client service manager 19 which manages information related to the second function; and a plug-in 20 which requests the client service manager 19 for the information related to the second function and provides the web browser 18 with the information related to the second function to thereby apply the aforementioned information to a script and display the second item 104a (shown in FIG. 6) corresponding to the second function when the script of the UI page is being executed.

FIG. 6 is a view illustrating a first UI 100 according to an exemplary embodiment.

The first UI 100 may include an area 101 for displaying an image corresponding to the first function; a first area 103 for displaying at least one first item 103a corresponding to the first function; a second area 104 for displaying at least one second item 104a corresponding to the second function; and a text area 106 for explaining contents of the first UI 100.

The configuration of the first UI 100 is the same as a generally known RUI except for the second area 104 displaying the second item 104a corresponding to the second function. Accordingly, only the second item 104a provided in the second area 104 will be described in further detail hereinafter.

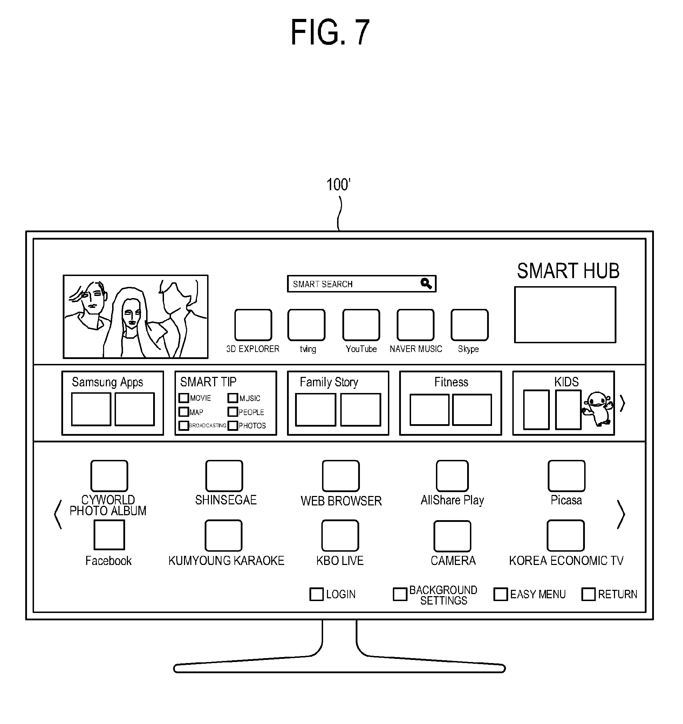

In an exemplary embodiment, the second item 104 is displayed in the form of an icon, e.g., an icon including a sub name, an icon including a text, or an icon linked to a website, and is configured to display a second UI 100' including sub items of the second function, as shown in FIG. 7, or to directly execute or display a corresponding function of the second item 104, using the controller 14 of the display apparatus 1, when the second item 104 is selected by a user's input of a function selection using a remote controller.

The second function of the second item 104a may be a function for displaying an image by an application or content, e.g., a smart TV hub function displayed as the second UI 100' shown in FIG. 7.

As shown in FIG. 7, the second UI 100' may display only sub items of the second function 104. The second UI 100' may be configured to further include an area for displaying an image corresponding to the first function, which is added to the sub items of the second function or separately from the sub items of the second function, as necessary, and/or configured as a mixed type for further outputting audio corresponding to the first function. In the latter case, the second UI 100' may be configured to control playing, suspending, removing, size/intensity adjusting of images and/or audio of the first function, which are output based on a user's input given using a remote controller to select a function, through the controller 14.

If a user ends the function after use, the second item 104a is configured to return to the first UI page 100 or return to a standby mode waiting for a command from the service providing server 2 using the controller 14.

The second item 104a forms a part of the first UI 100 in the example in FIG. 6, but the arrangement, form, and configuration of the second item 104a is not limited to those explained in FIG. 6 and may vary. For example, the second item 104a may be arranged in the background or in a next page of the first UI 100 for execution, and as necessary, may be arranged so that a service screen including the concerned item is overlaid on the first UI page.

Returning to FIG. 1, if a user's input, i.e., a remote signal is given to the display apparatus 1 through a remote controller to select a function, the display apparatus 1 determines whether the user's input is given with respect to the first function predetermined by the service providing server 2 or with respect to the second function that may be added by the display apparatus 1, and if it is determined that the user's input is given with respect to the first function, transmits corresponding control command information to the service providing server 2 as in an existing routine manner. The service providing server 2 transmits to the display apparatus 1 a request for driving the first function in response to the received control command information, together with user account information for user authentication and/or server status information as needed for driving the first function corresponding to the selected first item 103a. According to the request for driving the first function from the service providing server 2, the display apparatus 1 authenticates a user based on the user account information and drives the requested function.

If the user's input is related to the second function that may be added by the display apparatus 1, the display apparatus 1 drives the requested function through the plug-in 20 of the UI generating program 16 shown in FIG. 4.

The first and second functions of the first and second items 103a and 104a may be, e.g., driven through an application programming interface (API) provided by the display apparatus 1, or a transmission of information for driving the first and second functions and a driving of the first and second functions may be requested though a RUI protocol extension between the display apparatus 1 and the service providing server 2.

According to an exemplary embodiment, the display apparatus 1 simultaneously shows a user not only the first function predetermined by the service providing server 2 but also the second function that may be added by the display apparatus 1 through the UI provided by the service providing server 2 so that a user may selectively use the first and second functions.

Unlike in the related-art RUI system, a user does not need to convert a signal input to a display screen of the display apparatus 1 from the service providing server 2 to the display apparatus 1 through a remote controller of the service providing server 2 or the display apparatus 1 thus to pull up a UI provided by the display apparatus 1 to the display screen in order to use the second function that may be added by the display apparatus 1 other than the first function displayed in the RUI page, and does not need to convert the signal input to the display screen of the display apparatus 1 from the display apparatus 1 to the service providing server 2 through the remote controller thus to bring a UI provided by the service providing server 2 in order to use the first function predetermined by the service providing server 2 again.

FIG. 3 is a block diagram illustrating the display apparatus 1 according to an exemplary embodiment.

The display apparatus 1 may include an operation performer 11, a user input part 12, a communication part 13 and a controller 14. The display apparatus 1 may further include a storage part 15. The operation performer 11 performs operations of the display apparatus 1. For example, if the display apparatus 1 includes a TV, the operation performer 11 may include a signal receiver 111, an image processor 112 and a display 113. However, the operation performer 11 corresponds to functions of a product in which the display apparatus 1 is embodied, and is not limited to the example shown in FIG. 3.

The signal receiver 111 may receive an image signal included in a broadcasting signal transmitted by a broadcasting signal transmitter (not shown), receive an image signal from an image device such as a DVD player and BD player, receive an image signal from a PC, receive an image signal from a mobile device such as a smart phone and a smart pad, receive an image signal through a network such as the Internet or receive image contents stored in a storage medium, such as a universal serial bus (USB) storage medium, as an image signal.

The image processor 112 processes an image signal received by the signal receiver 111 to display an image based on the processed image signal. The image processor 112 may decode, enhance or scale image signals. The display 113 displays an image thereon based on the image signal processed by the image processor 112. The display 113 may include liquid crystal display (LCD), plasma display panel (PDP) or organic light emitting diode (OLED), but not limited thereto.

The user input part 12 receives a user's input. The user input part 12 may include, e.g., a remote controller (not shown), and a remote controller signal receiver to receive a remote controller signal including key input information corresponding to a user's input from the remote controller. Optionally, the user input part 12 may be implemented as a manipulation panel provided in the display apparatus 1 and generating key input information corresponding to a user's input.

The communication part 13 communicates with the service providing server 2 through the network 3. The communication part 13 exchanges user's input and information on analysis result of the user's input, with the service providing server 2 according to a control of the controller 14.

The controller 14 controls the operation performer 11 to perform operations according to a user's input.

If UI information is received from the service providing server 2 through the communication part 13, the controller 14 stores the received UI information 151 in the storage part 15 such as a memory. If the user's input is received through the user input part 12 with respect to the connection with the service providing server 2, the controller 14 generates the first UI 100 including the first item 103a corresponding to the first function based on the stored UI information 151 and the second item 104a corresponding to the second function that may be added by the display apparatus 1 from a plurality of functions of the display apparatus 1 and controls the display 113 through the image processor 112 of the operation performer 11 to display the generated first UI 100.

To do so, the controller 14 may include a central processing unit (CPU) and may execute a control program (not shown) and the UI generating program 16. The controller 14 may further include a non-volatile memory such as a flash memory to store the control program and the UI generating program 16, and a volatile memory such as a DDR loading at least a part of the control program and the UI generating program 16 to ensure a prompt access of the CPU. The control program and the UI generating program 16 of the controller 14 are programmed to include the content for controlling operations of the operation performer 11 and to include the content for generating the first UI 100 including the first item 103a and the second item 104a, based on the stored UI information 151, respectively.

In particular, the UI generating program 16 is programmed to include the web browser 18, the client service manager 19 and the plug-in 20 as explained above with reference to FIG. 4.

Information related to the second function managed by the client service manager 19 may include the number, name, ID, category, related keywords, degree of importance, driving information, variable information and/or displayed icons of the second function.

If user's input is received through the user input part 12 with respect to the driving of the second item 104a displayed in the first UI 100, the service providing server 2 does not need to additionally interpret the user's input such as user authentication. Thus, the controller 14 requests the operation performer 11 to drive the related function through the plug-in 20 of the UI generating program 16 that is loaded to the volatile memory.

If a user's input is received through the user input part 12 with respect to the driving of the first item 103, the controller 14 transmits corresponding control command information to the service providing server 2 in a general routine manner, and the service providing server 2 transmits to the display apparatus 1 a request for driving the first function together with the user account information for user authentication necessary for driving the first function corresponding to the selected first item 103a and/or server status information. The controller 14 controls operations of the operation performer 11 to drive the concerned function according to the driving request from the service providing server 2 after authenticating the user based on the user account information.

If the usage of the service providing server 2 is authenticated in advance and there is no need to perform procedures for interpreting user's input such as user authentication to drive the first function, the controller 14 does not transmit to the service providing server 2 the request for driving the first function and may request the operation performer 11 to drive the related function through the plug-in 20 of the UI generating program 16 as in the case where the user's input is received with respect to the driving of the second item 104a, as described above, even upon the receipt of the user's input with respect to the driving of the first item 103a through the user input part 12.

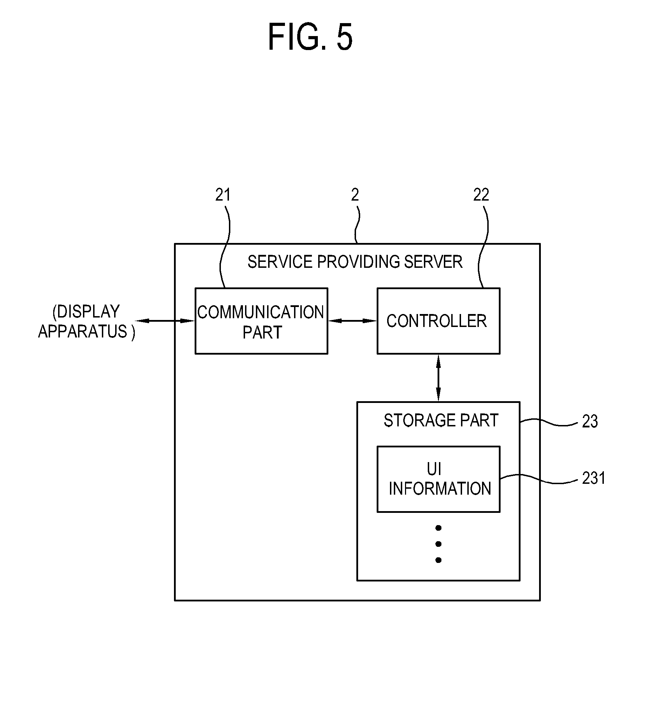

FIG. 5 is a block diagram of the service providing server 2 according to an exemplary embodiment.

The service providing server 2 includes a communication part 21, a controller 22 and a storage part 23. The communication part 21 communicates with the communication part 13 of the display apparatus 1 through the network 3.

The controller 22 controls operations of the service providing server 2.

The controller 22 controls the communication part 21 to transmit UI information 231 stored in the storage part 23 such as a memory to the display apparatus 1 if it receives a request for UI information from the controller 14 of the display apparatus 1 through the communication part 21. The request for UI information may be provided by user's input given for the connection of the display apparatus 1 and the service providing server 2.

The controller 22 controls the communication part 21 to transmit to the display apparatus 1 a request for driving the first function together with user account information for user authentication necessary for driving the first function corresponding to the first item 103a and/or server status information if it receives control command information corresponding to the user's input with respect to the driving of the first item 103a, from the controller 14 of the display apparatus 1 through the communication part 21.

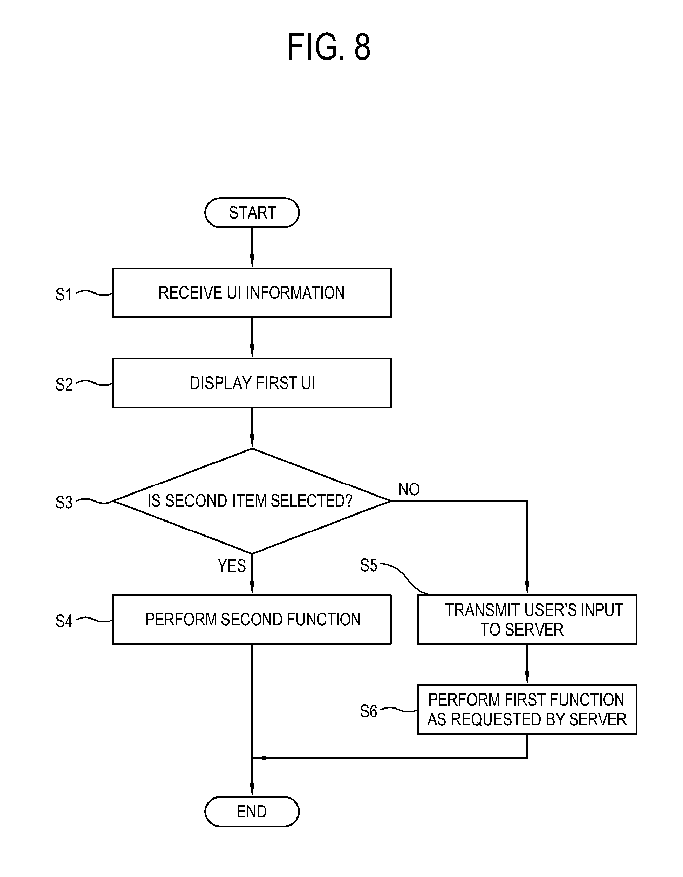

FIG. 8 is a flowchart showing operations of the display apparatus 1 according to an exemplary embodiment.

The controller 14 of the display apparatus 1 requests the service providing server 2 for the UI information through the communication part 13 according to user's input with respect to the connection between the display apparatus 1 and the service providing server 2, and receives from the service providing server 2 the UI information corresponding to the first function predetermined by the service providing server 2 from a plurality of functions performable by the display apparatus 1 (in operation S1). The received UI information 151 may be stored in the storage part 15 such as a memory.

The controller 14 generates through the UI generating program 16 the first UI 100 including the first item 103a corresponding to the first function based on the received UI information 151 and the second item 104a corresponding to the second function that may be added by the display apparatus 1, and displays the first UI 100 on the display unit 113 (in operation S2).

If a remote controller signal is received corresponding to the user's input given by the user input part 12 for selecting a function, the controller 14 determines whether the remote controller signal is the user's input with respect to the driving of the first item 103a displayed in the first UI 100 or the user's input with respect to the driving of the second item 104a (in operation S3).

If it is determined that the remote controller signal is user's input with respect to the driving of the second item 104a, there is no need to perform procedures for interpreting the user's input such as user authentication procedures in the service providing server 2. Thus, the controller 14 requests the operation performer 11 to drive the corresponding function through the plug-in 20 of the UI generating program 16 loaded to the volatile memory (in operation S4). The configuration and form of the second item 104a that is driven by the controller 14 is the same as those explained above with reference to FIGS. 6 and 7. Accordingly, the configuration and form of the second item 104a that is driven by the controller 14 will be not described in detail.

If it is determined that the remote controller signal is the user's input with respect to the driving of the first item 103a, the controller 14 transmits the control command information to the service providing server 2 corresponding to the user's input in an existing routine manner (in operation S5), and the service providing server 2 interprets the control command information and transmits to the display apparatus 1 the request for driving the first function together with the user account information for user authentication necessary for driving the first function corresponding to the first item 103a and/or server status information. The controller 14 controls the operation performer 11 to drive the concerned function according to the driving request from the service providing server 2 after authenticating a user based on the user account information (in operation S6).

If the usage of the service providing server 2 is authenticated in advance and there is no need to perform procedures for interpreting the user's input such as user authentication to drive the first function, the controller 14 may skip the transmission of the driving request for the first function to the service providing server 2 as in the case where the user's input is received with respect to the driving of the second item 104a, and may execute the plug-in 20 of the UI generating program 16 and request the operation performer 11 to drive the corresponding function, even if it is determined at operation S3 that the user's input with respect to the driving of the first item 103a.

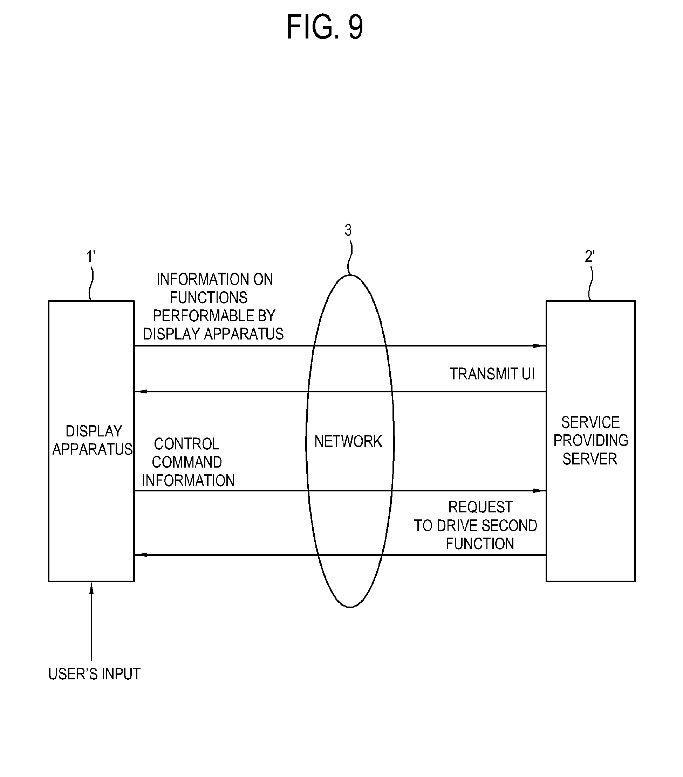

FIGS. 9, 11 and 12 are block diagrams showing a display apparatus 1' and a service providing server 2' according to another exemplary embodiment.

The display apparatus 1' and the service providing server 2' according to another exemplary embodiment are connected to each other through a network 3.

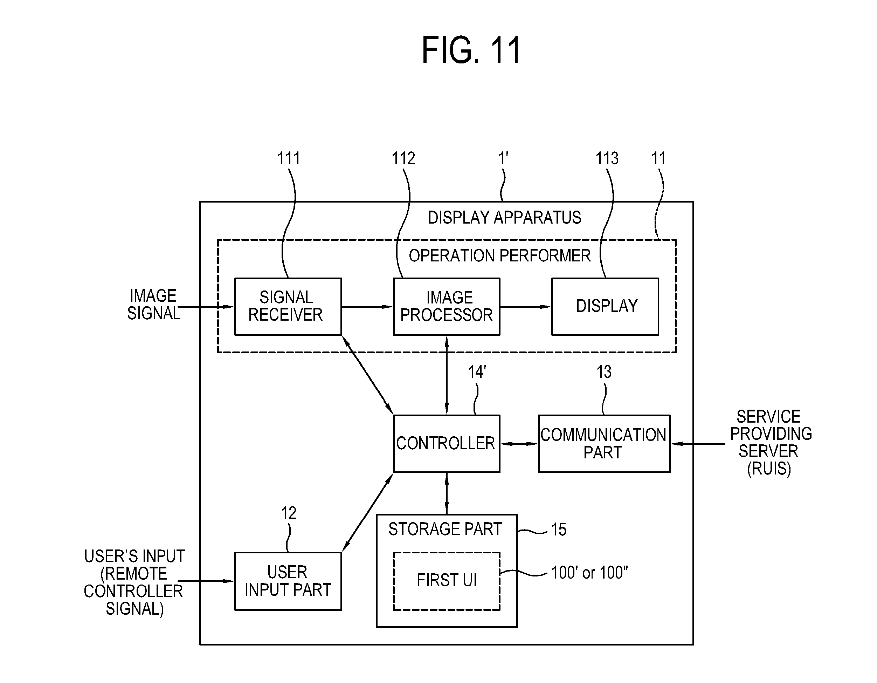

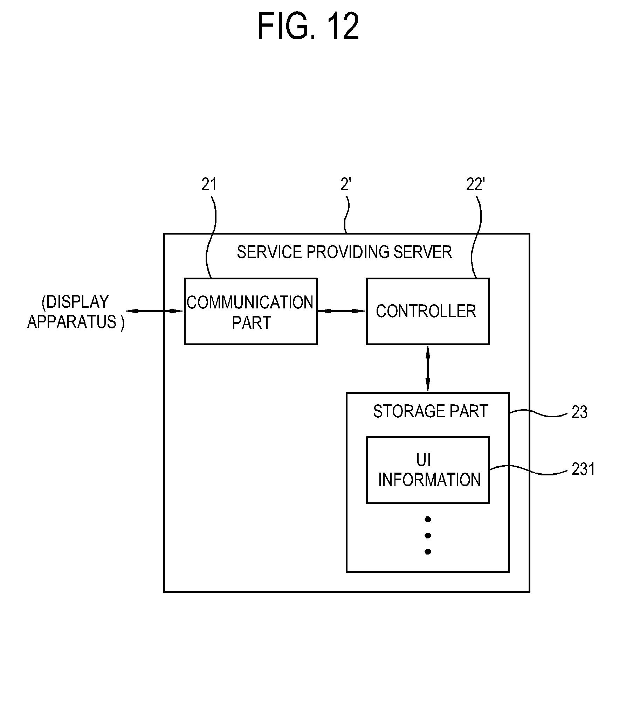

The display apparatus 1' and the service providing server 2' are analogous to the display apparatus 1 and the service providing server 2 which are explained above with reference to FIGS. 1 to 5, except for controllers 14' (shown in FIG. 11) and 22' (shown in FIG. 12) of the display apparatus 1' and the service providing server 2', respectively. Accordingly, the controllers 14' and 22' will be described only.

Unlike the controller 14 of the display apparatus 1, the controller 14' of the display apparatus 1' according to an exemplary embodiment does not generate a first UI 100, and transmits to the service providing server 2' information about functions that may be performed by the display apparatus 1' including information at least about a second function through the communication part 13. The functions that may be performed by the display apparatus 1' may include first and second functions, in particular, at least the number, name, ID, category, related keywords, degree of importance, driving information, variable information and/or displayed icons of the second function. Such information is stored in the storage part 15 such as a memory in advance.

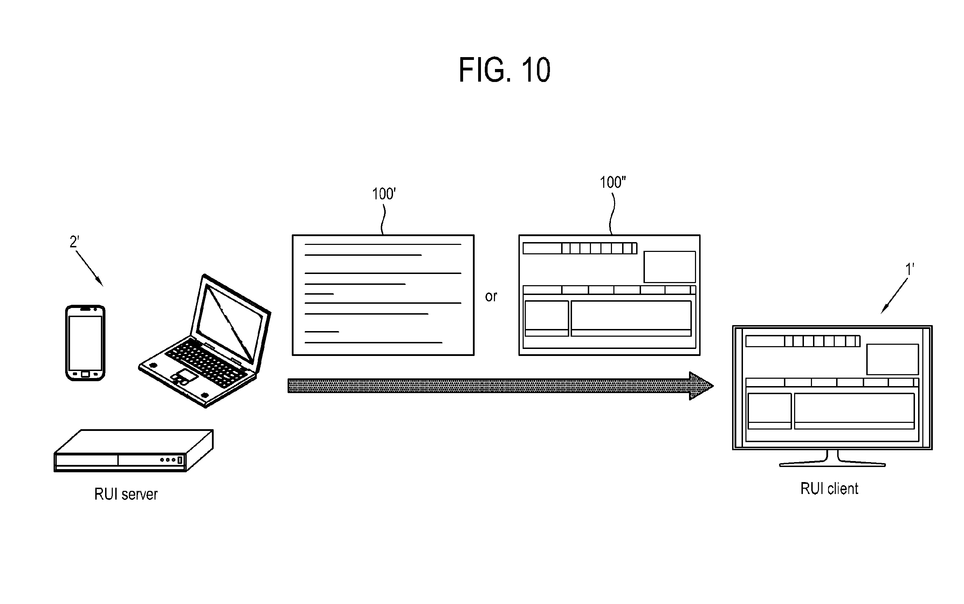

Based on the received information about functions that may be performed by the display apparatus 1' and UI information corresponding to the first function predetermined by the service providing server 2' as stored in the storage part 23, the controller 22' of the service providing server 2' generates a fist UI 100' or 100" (refer to FIG. 10) including a first item 103a corresponding to the first function and a second item 104a corresponding to the second function that may be added by the display apparatus 1' and is not included in the first function among a plurality of functions performable by the display apparatus 1', and transmits the generated first UI 100' or 100" to the display apparatus 1' through the communication part 21. The first and second items 103a and 104a of the first UI 100' or 100" are the same as the first and second items 103a and 104a shown in FIGS. 6 and 7 and thus will not be described in detail.

Similar to the exemplary embodiment explained with reference to FIG. 2, the first UI 100' or 100" may be a script-based UI, or a bitmap-based UI, as shown in FIG. 10. If the first UI 100' or 100" is a script-based UI, the first UI 100' may include, e.g., CEA 2014 standard UI based on HTML4 or DLNA RUIH standard UI based on HTML5. If the first UI 100' or 100" is a bitmap-based UI, the first U1 100" may include, e.g., an RVU UI.

The controller 22' may include a CPU, and execute a control program (not shown) and a UI generating program (not shown). The controller 22' may further include a non-volatile memory such as a flash memory to store the control program and the UI generating program therein, and a volatile memory such as a DDR loading at least a part of the control program and the UI generating program to ensure a prompt access of the CPU. The control program and the UI generating program of the controller 22' are programmed with data for controlling operations of the service providing server 2', and data for generating the script-based first UI 100' or the bitmap-based first UI 100" including the first and second items 103a and 104a based on the received information about functions that may be performed by the display apparatus 1' and the UI information stored in the storage part 23 according to the predetermined first function.

The controller 14' of the display apparatus 1' controls the storage part 15 to store the first UI 100' or 100" received through the communication part 13, in the storage part 15.

If a remote controller signal is received corresponding to user's input given through the user input part 12 to select a function of the first UI 100' or 100", the controller 14' transmits to the service providing server 2' control command information corresponding to the selected item, in an existing routine manner, regardless of whether the remote controller signal is user's input with respect to the driving of the first item 103a displayed in the first UI 100' or 100" or user's input with respect to the driving of the second item 104a.

In response to the control command information received through the communication part 21, the controller 22' of the service providing server 2' transmits the request for driving the first or second function to the display apparatus 1', and the controller 14' of the display apparatus 1' requests the operation performer 11 to drive the corresponding function according to the request for driving the first or second function received through the communication part 13 from the service providing server 2'.

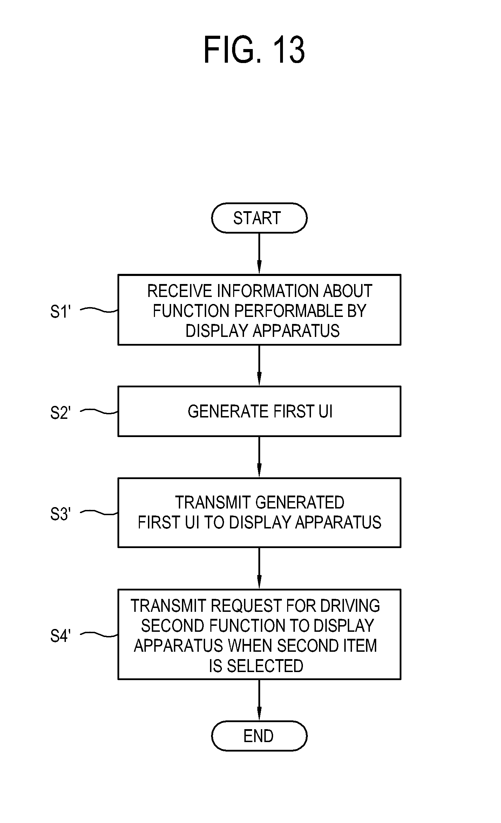

FIG. 13 is a flowchart showing operations of the service providing server 2' according to another exemplary embodiment.

The controller 22' of the service providing server 2' receives information about functions that may be performed by the display apparatus 1', from the display apparatus 1' through the communication part 21 (in operation S1').

Based on the information about functions that may be performed by the display apparatus 1' and the UI information stored in the storage part 23 such as a memory and corresponding to the first function predetermined by the service providing server 2', the controller 22' generates the first UI 100' or 100" including the first item 103a corresponding to the first function and the second item 104a corresponding to the second function that may be added by the display apparatus 1' (in operation S2').

The controller 22' transmits the generated first UI 100' or 100" to the display apparatus 1' through the communication part 21 (in operation S3').

The controller 14' of the display apparatus 1' stores the first UI 100' or 100' received through the communication part 13, in the storage part 15 and concurrently displays the first UI 100' or 100" on the display 113, and transmits the control command information corresponding to the selection of the first item 103a or the second item 104a to the service providing server 2' through the communication part 13 when the first item 103a or the second item 104a is selected according to the user's input for the selection thereof.

In response to the control command information received through the communication part 13, the controller 22' of the service providing server 2' transmits the request for driving the first or second function, to the display apparatus 1' (in operation S4'). The controller 22' may also transmit to the display apparatus 1' the user account information for user authentication necessary for driving the first or second function and/or server status information.

The controller 14' of the display apparatus 1' requests the operation performer 11 to drive the corresponding function according to the request for driving the first or second function received from the service providing server 2' through the communication part 13.

As described above, the display apparatus, the server and the control methods thereof according to the exemplary embodiments displays functions predetermined by the server and functions that may be added by the display apparatus from among a plurality of functions that may be performed by the display apparatus, in the UI page provided by the server. As a result, a user may freely use the functions of the server and the display apparatus rather than using only the functions of the server as in the related-art RUI system.

Although a few exemplary embodiments have been shown and described, it will be appreciated by those skilled in the art that changes may be made in these exemplary embodiments without departing from the principles of the inventive concept, the range of which is defined in the appended claims and their equivalents. The foregoing exemplary embodiments are merely illustrative and are not to be construed as liming. Many alternatives, modifications, and variations will be apparent to those skilled in the art. The scope is defined not by the detailed description of exemplary embodiments but by the appended claims, and their equivalents and all differences within the scope will be construed as being included in an inventive concept.

## Claims

1. A display apparatus comprising:
an image processor configured to process an image signal;
a display configured to display an image thereon based on the image signal;
a communication part configured to communicate with a server;
a user input part configured to receive input from a user; and
a controller configured to receive, from the server via the communication part, user interface (UI) information corresponding to a first function predetermined by the server from among a plurality of functions performable by the display apparatus, configured to display on the display a first UI comprising a first item corresponding to the first function based on the received UI information and a second item corresponding to a second function added by the display apparatus from among the plurality of functions,
wherein, if the second item of the first UI is selected via the user input part, the controller controls the display apparatus such that the second function is performed.

2. The display apparatus according to claim 1, wherein the UI information comprises script-based UI information.

3. The display apparatus according to claim 2, wherein the controller executes a web browser and displays on the display a UI page based on the script-based UI information.

4. The display apparatus according to claim 3, wherein, if a script of the UI page is operating, the controller executes a plug-in which provides the web browser with information related to the second function.

5. The display apparatus according to claim 1, wherein the controller transmits at least the information related to the second function to the server, receives information about the first UI comprising the second item from the server, and displays on the display the first UI comprising the second item based on the received information.

6. The display apparatus according to claim 5, wherein the transmitted information about the second function comprises at least one of a number, a name, an identifier, a category, related keywords, a degree of importance, driving information, variable information, and at least one icon for representing a display of the second function.

7. The display apparatus according to any of claims 1 to 6, wherein the second function comprises a function of displaying an image by an application or a function of displaying an image from content.

8. The display apparatus according to claim 1, wherein if the second item is selected, the controller controls the display to display a second UI comprising sub items of the second function.

9. The display apparatus according to claim 8, wherein the controller further outputs at least one of an image and audio of the first function on the displayed second UI.

10. The display apparatus according to claim 5, wherein the information about the first UI comprises the second item received from the server and further comprises one of a bitmap-based UI and a script-based UI.

11. A server comprising:
a communication part configured to communicate with a display apparatus according to any of claims 1 to 10;
a storage part configured to store UI information corresponding to a first function predetermined by the server from among a plurality of functions performable by the display apparatus; and
a controller configured to generate a first user interface (UI) comprising a first item corresponding to the first function and a second item corresponding to a second function added by the display apparatus from among a plurality of functions performable by the display apparatus, based on the stored UI information and information about the plurality of functions performable by the display apparatus, wherein the plurality of functions performable by the display apparatus are received from the display apparatus through the communication part, and configured to transmit the generated first UI to the display apparatus.

12. The server according to claim 11, wherein the information about functions performable by the display apparatus comprises at least one of a number, a name, an identifier, a category, related keywords, a degree of importance, driving information, variable information and at least one icon for representing a display of the second function.

13. The server according to claim 11, wherein, if the second item is selected via input from a user at the display apparatus, the controller requests the display apparatus to perform the second function corresponding to the second item.

14. The server according to claim 11, wherein the controller transmits to the display apparatus the generated first UI together with at least one of user account information for user authentication and server status information.

15. The server according to claim 13, wherein the second function is requested and driven by an application programming interface (API) provided by the display apparatus or through a remote user interface (RUI) protocol extension between the server and the display apparatus.
